# EUROPEAN PATENT SPECIFICATION

(11) **EP 2 960 620 B1**
(45) Date of publication and mention of the grant of the patent: **04.04.2018**
(21) Application number: 14743917.8
(22) Date of filing: 07.02.2014
(51) Int. Cl.: G01B 11/10, G01N 21/952, B60M 1/28

(54) **WEAR MEASURING DEVICE AND METHOD FOR SAME**
VERSCHLEISSMESSVORRICHTUNG UND VERFAHREN DAFÜR
DISPOSITIF DE MESURE DE L'USURE ET PROCÉDÉ ASSOCIÉ

(30) Priority: 19.02.2013 JP 2013029767
(43) Date of publication of application: 30.12.2015
(73) Proprietor: Meidensha Corporation, Tokyo 141-6029 (JP)
(72) Inventor: NIWAKAWA, Makoto, Tokyo 141-6029 (JP); TABAYASHI, Seiji, Tokyo 141-6029 (JP); WATABE, Yusuke, Tokyo 141-6029 (JP)
(74) Representative: Strehl Schübel-Hopf & Partner
(86) International application number: PCT/JP2014/052837
(87) International publication number: WO 2014/115902

(56) References cited:
- WO-A1-02/21076
- WO-A1-2005/090903
- DE-C1- 19 634 060
- JP-A- H09 163 502
- JP-A- H09 189 523
- JP-A- 2006 248 411
- JP-A- 2008 102 112
- JP-A- 2008 104 312
- JP-A- 2008 292 336
- JP-A- 2009 274 508

## Description

### TECHNICAL FIELD

The present invention relates to a wear measuring device and a wear measuring method. Specifically, the present invention belongs to the field of overhead wire inspection and measurement in which the wear of a trolley wire is measured by capturing an image of the width of the lower surface of the trolley wire from the roof of a train and processing this image. In particular, the present invention is characterized by obtaining a wear measurement value while taking into consideration the tilt angle of a pantograph. Note that "deviation" and "displacement" are defined as follows. Specifically, deviation refers to "in railway terminology, the position at which a pantograph comes in contact with a trolley wire or the distance thereto from the center of the pantograph" whereas displacement refers to "a general physical amount and the amount of movement from an original position."

### BACKGROUND ART

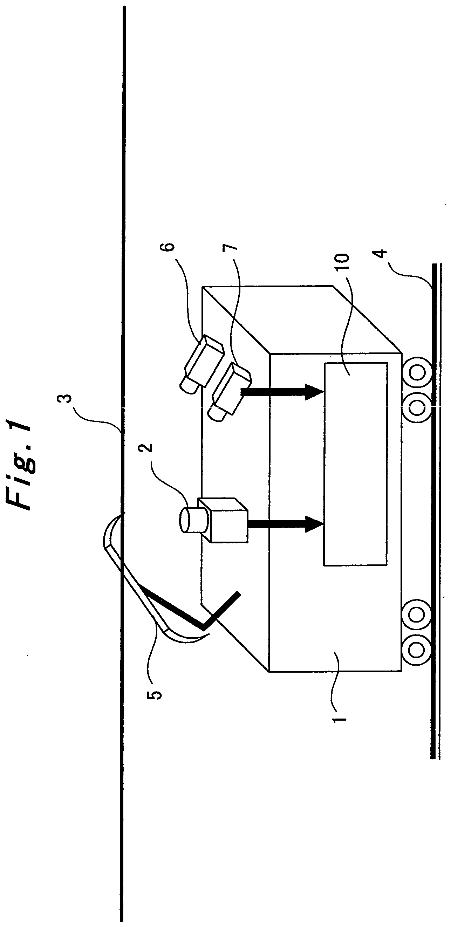

A current wear measuring technique will be described. As illustrated in Fig. 1, a wear measuring camera 2 installed on the roof of a train 1 captures an image of the lower surface of a trolley wire 3. The trolley wire 3 is suspended along rails 4 on which the train 1 travels, and the wear measuring camera 2 is installed at an upward angle to face the trolley wire 3 above. A pantograph 5 which comes in contact with the trolley wire 3 is installed on the roof of the train 1 as well.

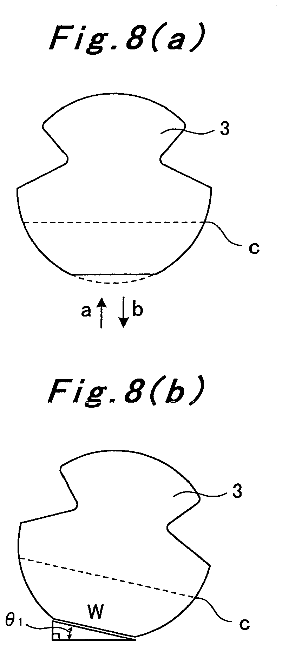

As illustrated in Part (a) of Fig. 8, the lower surface of the trolley wire 3 wears into a flat shape as a result of contact with the pantograph 5. Thus, a captured image of the lower surface of the trolley wire 3 is processed to measure the wear width, and the wear width of the trolley wire is converted into the remaining diameter of the trolley wire. In sum, conversion is done from the reflection width to the wear width to the remaining diameter. Part (a) of Fig. 8 illustrates a cross section of the trolley wire 3 in a non-tilted state.

An accurate wear measurement value can be obtained if the lower surface of the trolley wire 3 faces straight to the camera 2 as illustrated in Part (a) of Fig. 8, that is, if the lower surface of the trolley wire 3 is horizontal. This is obvious because, in Part (a) of Fig. 8, illuminating light a illustrated by a vertically upward arrow is reflected at the lower surface of the trolley wire 3 and turns into reflected light b illustrated by a vertically downward arrow. In Part (a) of Fig. 8, a broken line c in the drawing indicates a wear limit.

DE 196 34 060 C1 discloses wear measuring technology from which the first part of each of claims 1 and 5 starts out. That technology uses cameras installed on the pantograph. Meanwhile, there have been techniques to measure vibration of a vehicle (the roll angle of the vehicle) as described in Patent Documents 1, 2. However, there has not been any technique that involves measuring the tilt (roll angle) of a pantograph and correcting the wear measurement value of a trolley wire based on this tilt angle.

### PRIOR ART DOCUMENTS

### PATENT DOCUMENTS

Patent Document 1: Japanese Patent Application Publication No. 2012-192759
Patent Document 2: Japanese Patent Application Publication No. 2003-052101
Patent Document 3: United States Patent Application Publication No. 2007/0296949
Patent Document 4: Japanese Patent Application Publication No. 2008-104312
Patent Document 5: Japanese Patent Application Publication No. 2011-033428
Patent Document 6: Japanese Patent Application Publication No. 2010-266341
Patent Document 7: Japanese Patent Application Publication No. 2010-127746

### SUMMARY OF THE INVENTION

### PROBLEMS TO BE SOLVED BY THE INVENTION

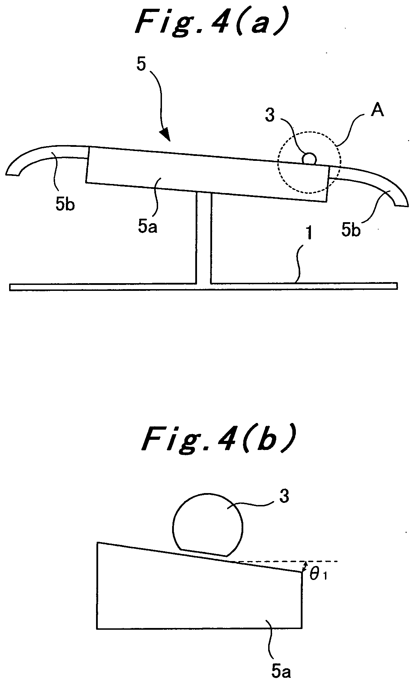

As illustrated in Part (a) of Fig. 4, in a case where the trolley wire 3 is in contact with the left or right end of the pantograph 5, the pantograph 5 being pushed downward locally at the left or right end tilts (rolls). As a result, as illustrated in Part (b) of Fig. 4, the lower surface of the trolley wire 3 is tilted by the upper surface of the pantograph 5 at an angle θ₁ from the horizontal direction. In an image capturing this state, the wear width of the trolley wire 3 appears narrower. This leads to a problem in that the remaining diameter is calculated to be larger than the actual remaining diameter.

Specifically, the pantograph 5 is such that downwardly curved horns 5b are mounted to the left and right ends of a straight contact strip 5a. Part (a) of Fig. 4 illustrates a case where the trolley wire 3 is in contact with the left or right end of the tilted contact strip 5a. If the lower surface of the trolley wire 3 is tilted at the angle θ₁ from the horizontal direction as illustrated in Part (b) of Fig. 8, the lower surface of the trolley wire 3 is captured in an image not as an actual wear width W, but as a width W_{image} smaller than this actual wear width W.

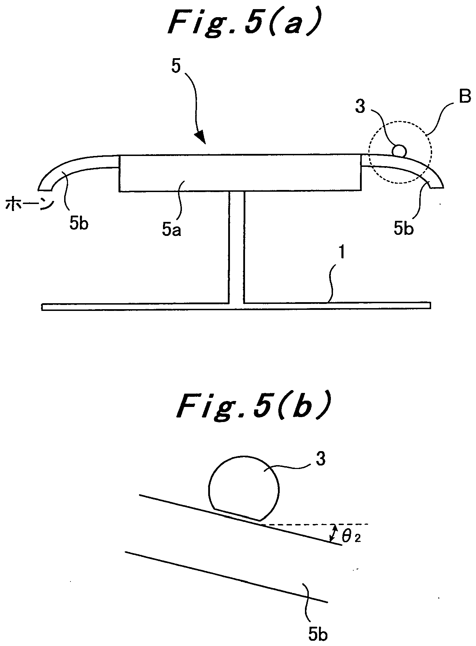

Moreover, as illustrated in Part (a) of Fig. 5, in a case where the contact strip 5a is horizontal but the trolley wire 3 is in contact with one of the curved horns 5b, the lower surface of the trolley wire 3 is tilted by the upper surface of the horn 5b at an angle θ₂ from the horizontal direction as illustrated in Part (b) of Fig. 5.

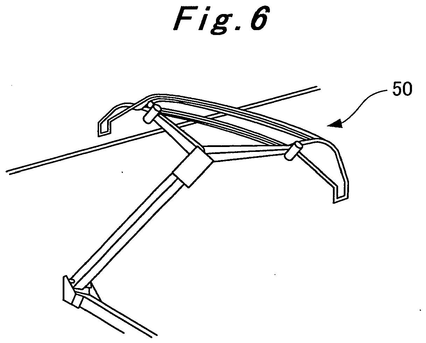

Furthermore, as illustrated in Fig. 6, in a case of a pantograph 50 with a contact strip of a curved shape (Patent Document 3), too, the lower surface of the trolley wire is tilted by the contact surface of the pantograph as illustrated in Part (b) of Fig. 5.

These cases have the problem in that the wear width of the trolley wire appears narrower in a camera image capturing the lower surface of the trolley wire, and the remaining diameter is therefore calculated to be larger than the actual remaining diameter.

### MEANS FOR SOLVING THE PROBLEMS

The invention solves the above problems by a wear measuring method and device in accordance with claim 1 and claim 5. The dependent claims relate to preferred aspects of the invention.

A wear measuring method according to a first aspect of the present disclosure is a wear measuring method in which an image of a lower surface of a trolley wire in contact with a pantograph is captured with a wear measuring camera installed on a roof of a train, and image processing is performed on the captured image of the lower surface of the trolley wire to measure a wear width of the trolley wire, characterized in that the wear measuring method comprises the step of finding an actual wear width by correcting the wear width in accordance with a tilt angle of the trolley wire tilted by an upper surface of the pantograph.

A wear measuring method according to a second aspect of the present disclosure is characterized in that in the first aspect, a tilt angle of the whole pantograph is used as the tilt angle of the trolley wire.

A wear measuring method according to a third aspect of the invention present disclosure is characterized in that in the first aspect, a tilt angle of a shape of the pantograph at a deviating position of the trolley wire is used as the tilt angle of the trolley wire.

A wear measuring method according to a fourth aspect of the invention present disclosure is characterized in that in the first aspect, a tilt angle obtained by adding a tilt angle of a shape of the pantograph at a deviating position of the trolley wire to a tilt angle of the whole pantograph is used as the tilt angle of the trolley wire.

A wear measuring device according to a fifth aspect of the present disclosure is a wear measuring device in which a wear measuring camera configured to capture an image of a lower surface of a trolley wire in contact with a pantograph is installed on a roof of a train, and which includes an image processing unit configured to measure a wear width of the trolley wire by performing image processing on the image of the lower surface of the trolley wire captured by the wear measuring camera, characterized in that the image processing unit includes a correction calculation part configured to find an actual wear width by correcting the wear width in accordance with a tilt angle of the trolley wire tilted by an upper surface of the pantograph.

A wear measuring device according to a sixth aspect of the present disclosure is characterized in that in the fifth aspect, two pantograph image capturing cameras configured to capture images of markers attached to two, left and right areas of the pantograph, respectively, are installed on the roof of the train, the image processing unit includes a whole pantograph tilt angle calculating part configured to calculate a tilt angle of the whole pantograph based on the images of the markers obtained by the pantograph image capturing cameras, and as the tilt angle of the trolley wire, the correction calculation part uses the tilt angle of the whole pantograph calculated by the tilt angle calculating part.

A wear measuring device according to a seventh aspect of the present disclosure is characterized in that in the fifth aspect, the image processing unit includes a deviation measuring part configured to measure a deviating position of the trolley wire from the image of the trolley wire captured by the wear measuring camera, the wear measuring device comprises a pantograph upper surface shape storing unit configured to store a shape of an upper surface of the pantograph corresponding to the deviating position of the trolley wire, the image processing unit includes a deviating position pantograph shape tilt angle calculating part configured to calculate a tilt angle of a shape of the pantograph at the deviating position of the trolley wire measured by the deviation measuring part, based on the shape of the upper surface of the pantograph stored in the pantograph upper surface shape storing unit, and as the tilt angle of the trolley wire, the correction calculation part uses the tilt angle of the shape of the pantograph at the deviating position of the trolley wire calculated by the tilt angle calculating part.

A wear measuring device according to an eighth aspect of the present disclosure is characterized in that in the fifth aspect, two pantograph image capturing cameras configured to capture images of markers attached to two, left and right areas of the pantograph, respectively, are installed on the roof of the train, the image processing unit includes a whole pantograph tilt angle calculating part configured to calculate a tilt angle of the whole pantograph based on the images of the markers obtained by the pantograph image capturing cameras, and the image processing unit includes a deviation measuring part configured to measure a deviating position of the trolley wire from the image of the trolley wire captured by the wear measuring camera, the wear measuring device comprises a pantograph upper surface shape storing unit configured to store a shape of an upper surface of the pantograph corresponding to the deviating position of the trolley wire, the image processing unit includes a deviating position pantograph shape tilt angle calculating part configured to calculate a tilt angle of a shape of the pantograph at the deviating position of the trolley wire measured by the deviation measuring part, based on the shape of the upper surface of the pantograph stored in the pantograph upper surface shape storing unit, and as the tilt angle of the trolley wire, the correction calculation part uses a tilt angle obtained by adding the tilt angle of the shape of the pantograph at the deviating position of the trolley wire calculated by the deviating position pantograph shape tilt angle calculating part to the tilt angle of the whole pantograph calculated by the whole pantograph tilt angle calculating part.

### EFFECT OF THE INVENTION

The present invention brings about such an advantageous effect that even in a case where a trolley wire is tilted by the upper surface of a pantograph, the actual wear width of the trolley wire can be obtained by correcting the wear width of the trolley wire based on the tilt angle of the whole pantograph, the tilt angle of the shape of the pantograph at the deviating position, or the tilt angle obtained by adding both of the tilt angles.

### BRIEF DESCRIPTION OF THE DRAWINGS

[Fig. 1] Fig. 1 is a schematic view of a wear measuring device according to a first embodiment of the present invention.
[Fig. 2] Fig. 2 is a schematic view of a wear measuring device according to a second embodiment of the present invention.
[Fig. 3] Fig. 3 is a schematic view of a wear measuring device according to a third embodiment of the present invention.
[Fig. 4] Part (a) of Fig. 4 is a front view of a pantograph in contact with a trolley wire at a tilted contact strip, and Part (b) of Fig. 4 is an enlarged view of an area A circled by a broken line in Part (a) of Fig. 4.
[Fig. 5] Part (a) of Fig. 5 is a front view of a pantograph in contact with a trolley wire at a curved horn, and Part (b) of Fig. 5 is an enlarged view of an area B circled by a broken line in Part (a) of Fig. 5.
[Fig. 6] Fig. 6 is a perspective view of a pantograph with a contact strip of a curved shape disclosed in Patent Document 3.
[Fig. 7] Part (a) of Fig. 7 is a front view of a pantograph on which two, left and right markers are installed, and Part (b) of Fig. 7 is an enlarged view of an area C circled by a broken line in Part (a) of Fig. 7.
[Fig. 8] Part (a) of Fig. 8 is a cross-sectional view of a trolley wire in a non-tilted state, and Part (b) of Fig. 8 is a cross-sectional view of the trolley wire in a tilted state.
[Fig. 9] Fig. 9 is a flowchart illustrating a wear measuring method according to the first embodiment of the present invention.
[Fig. 10] Fig. 10 is a flowchart illustrating a wear measuring method according to the second embodiment of the present invention.
[Fig. 11] Fig. 11 is a flowchart illustrating a wear measuring method according to the third embodiment of the present invention.
[Fig. 12] Fig. 12 is a block diagram illustrating the functional configuration of the wear measuring device according to the first embodiment of the present invention.

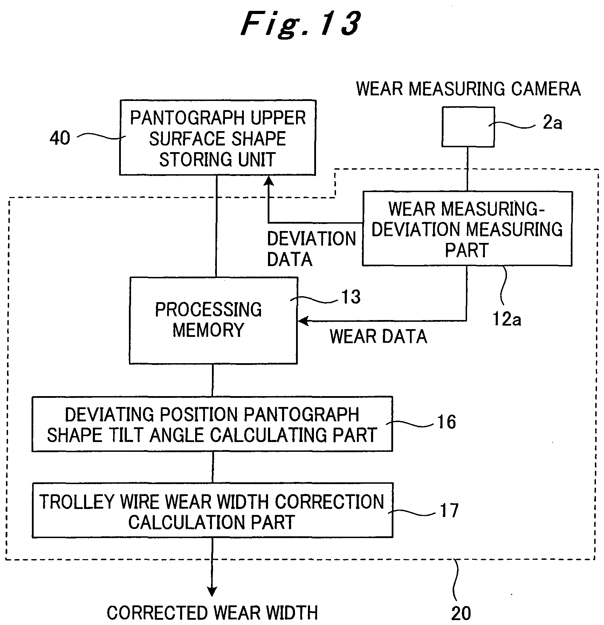

[Fig. 13] Fig. 13 is a block diagram illustrating the functional configuration of the wear measuring device according to the second embodiment of the present invention.

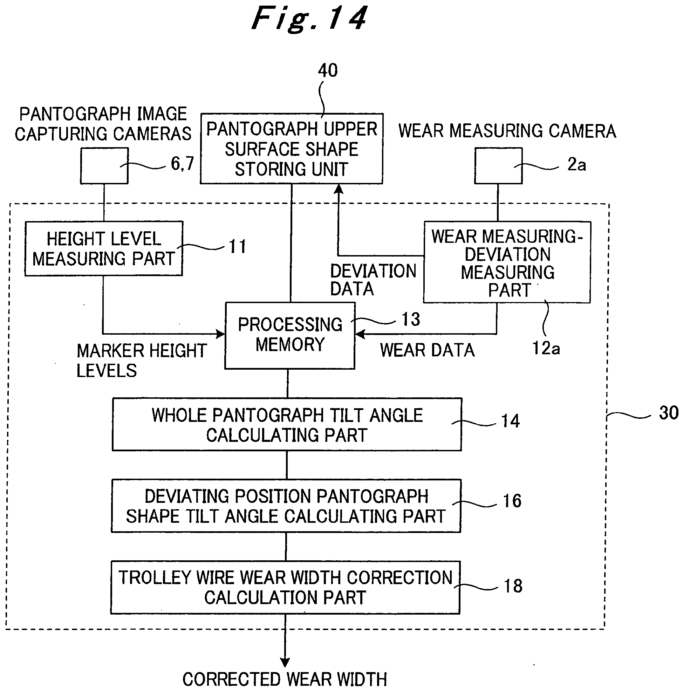

[Fig. 14] Fig. 14 is a block diagram illustrating the functional configuration of the wear measuring device according to the third embodiment of the present invention.
[Fig. 15] Part (a) of Fig. 15 is a front view illustrating an example of a pantograph upper surface shape, and Part (b) of Fig. 15 is a front view illustrating another example of the pantograph upper surface shape.

### MODES FOR CARRYING OUT THE INVENTION

Hereinbelow, the present invention will be described in detail with reference to embodiments illustrated in drawings.

### EMBODIMENT 1

Fig. 1 illustrates a schematic view of a wear measuring device according to a first embodiment of the present invention.

This embodiment is characterized by utilizing a fact that a tilt angle θ₁ of a whole pantograph 5 is approximately equal to the angle of the lower surface of a trolley wire 3 as illustrated in Fig. 4, and correcting the wear width of the trolley wire by using the tilt angle of the whole pantograph.

As illustrated in Fig. 1, the wear measuring device of this embodiment includes two pantograph image capturing cameras 6, 7 and one wear measuring camera 2 installed on the roof of a train 1, and an image processing unit 10 installed inside the train 1.

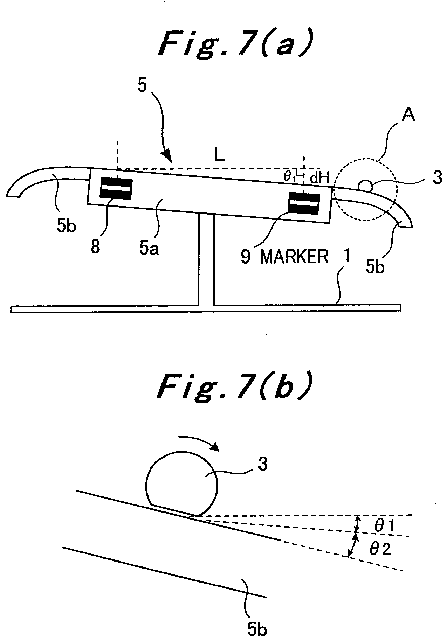

The pantograph 5 is installed on the roof of the train 1, and markers 8, 9 as illustrated in Fig. 7 are attached to two, left and right areas of a contact strip 5a of this pantograph 5.

The pantograph image capturing cameras 6, 7 are configured to capture images of the height levels of the pantograph 5 on the left and right sides, i.e. the markers 8, 9 attached to the two, left and right areas of the pantograph 5, respectively, and are installed at an obliquely upward angle. The design of each of the markers 8, 9 may be formed as, for example, a black and white stripe pattern as described in [Claim 1] and paragraph [0011] of Patent Document 4.

The wear measuring camera 2 is installed at an upright angle to be able to capture an image of the worn surface of the trolley wire 3 from immediately below.

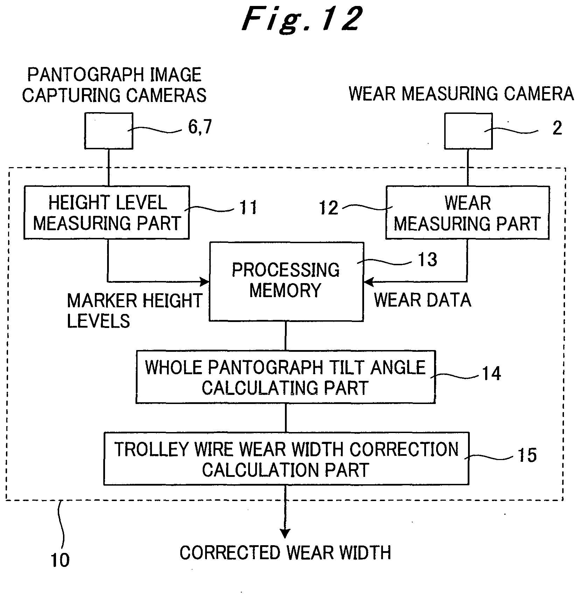

As illustrated in Fig. 12, the image processing unit 10 includes a height level measuring part 11, a wear measuring part 12, a processing memory 13, a whole pantograph tilt angle calculating part 14, and a trolley wire wear width correction calculation part 15.

The height level measuring part 11 is configured to receive images (marker height level data) of the markers 8, 9 obtained by the pantograph image capturing cameras 6, 7, perform image processing on these images to calculate the height levels of the two markers 8, 9, and output them to the processing memory 13. The height levels of the markers 8, 9 can be calculated also by using, for example, Patent Documents 5, 6. The horizontal distance between the two markers 8, 9 can be calculated together with the height level calculation, or may be known in advance.

The wear measuring part 12 is configured to receive an image (wear data) of the trolley wire 5 obtained by the wear measuring camera 2, perform image processing on this image to calculate a trolley wire wear width Wimage, and output it to the processing memory 13. The trolley wire wear width can found by using, for example, Patent Document 7.

The processing memory 13 is a memory configured to temporarily store data used in the height level measuring part 11, the wear measuring part 12, the whole pantograph tilt angle calculating part 14, and the trolley wire wear width correction calculation part 15 at the time of computation.

As illustrated in Part (a) of Fig. 7, the whole pantograph tilt angle calculating part 14 is configured to calculate a tilt (roll) angle θ1 = atan (dH/L) of the whole pantograph 5 by using a left-right height level difference dH between the markers 8, 9 and a horizontal distance L between the markers 8, 9 which are calculated by the height level measuring part 11 and stored in the processing memory 13.

The trolley wire wear width correction calculation part 15 is configured to calculate an actual wear width W by multiplying the trolley wire wear width Wimage measured by the wear measuring part 12 and stored in the processing memory 13, by 1/cos θ1 based on the tilt (roll) angle θ1 of the whole pantograph 5 found by the whole pantograph tilt angle calculating part 14.

As illustrated in Part (b) of Fig. 8, this is because the pantograph tilt angle θ1 is approximately equal to the tilt angle of the trolley wire 3, and the trolley wire wear width Wimage measured by the wear measuring part 12 is the product of the actual wear width W and cos θ1.

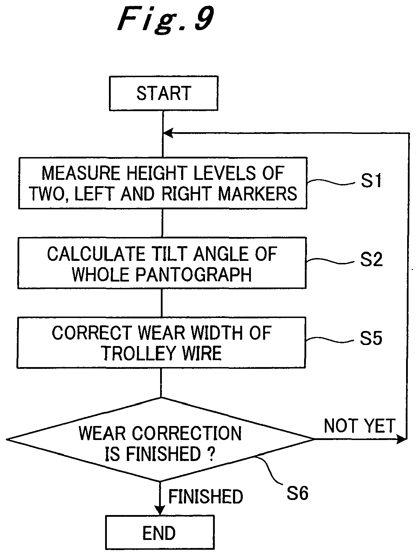

The operation sequence of this embodiment will be described by using a flowchart in Fig. 9.

First, images of the markers 8, 9 attached to the two, left and right areas of the pantograph 5 are captured by the pantograph image capturing cameras 6, 7, and the images of the markers 8, 9 obtained by the pantograph image capturing cameras 6, 7 are inputted to the height level measuring part 11, in which image processing is performed on these images to calculate the height levels of the two markers 8, 9, and they are outputted to the processing memory 13 (step S1).

Thereafter, the tilt (roll) angle θ1 = atan (dH/L) of the whole pantograph 5 is calculated by the whole pantograph tilt angle calculating part 14 based on the left-right height level difference dH between the markers 8, 9 and the horizontal distance L between the markers 8, 9 which are calculated by the height level measuring part 11 and stored in the processing memory 13 (step S2).

Then, the actual wear width W is calculated by the trolley wire wear width correction calculation part 15 by multiplying the trolley wire wear width W_{image} measured by the wear measuring part 12 and stored in the processing memory 13, by 1/cos θ₁ based on the tilt (roll) angle θ₁ of the whole pantograph 5 found by the whole pantograph tilt angle calculating part 14 (step S5).

Subsequently, step S1, step S2, and step S5 are repeated until wear correction is finished for all the measurement points (step S6).

In the conventional technique, as the pantograph 5 is tilted as a whole, the trolley wire is tilted by the upper surface of the pantograph 5, thereby causing an error in the trolley wire wear width. However, as specifically described above based on this embodiment, the embodiment can bring about such an advantageous effect that this error can be corrected based on the tilt angle of the whole pantograph 5.

### EMBODIMENT 2

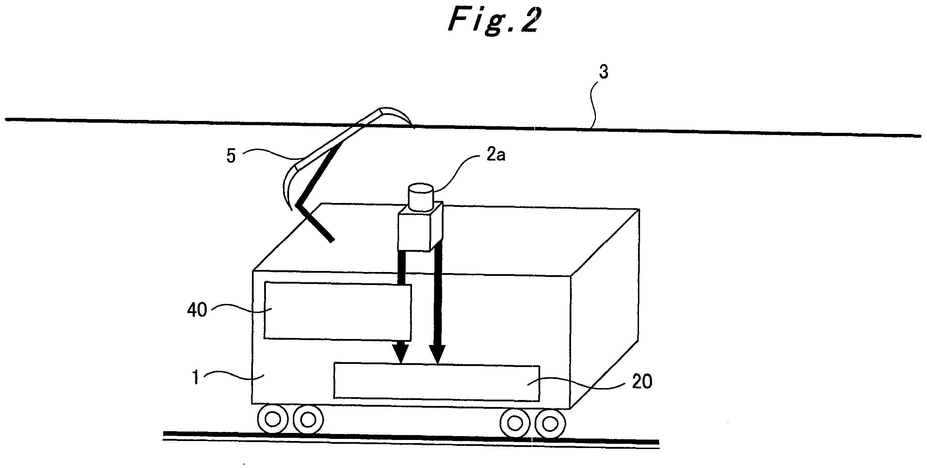

Fig. 2 illustrates a schematic view of a wear measuring device according to a second embodiment of the present invention.

This embodiment is characterized by correcting the wear width of a trolley wire by utilizing a fact that a tilt angle θ₂ of a pantograph shape at a deviating position is approximately equal to the angle of the lower surface of the trolley wire as illustrated in Fig. 5. Specifically, this is because there cases where a pantograph 5 may not be tilted as a whole but a pantograph shape at a deviating position such as a horn 5b may be tilted.

As illustrated in Fig. 2, the wear measuring device of this embodiment includes one wear measuring-deviation measuring camera 2a installed on the roof of a train 1, and an image processing unit 20 and a pantograph upper surface shape storing unit 40 installed inside the train 1.

The wear measuring-deviation measuring camera 2a is installed at an upright angle so that the wear measuring-deviation measuring camera 2a can capture an image of the worn surface of a trolley wire 3 from immediately below and measure the deviating position of the trolley wire 3.

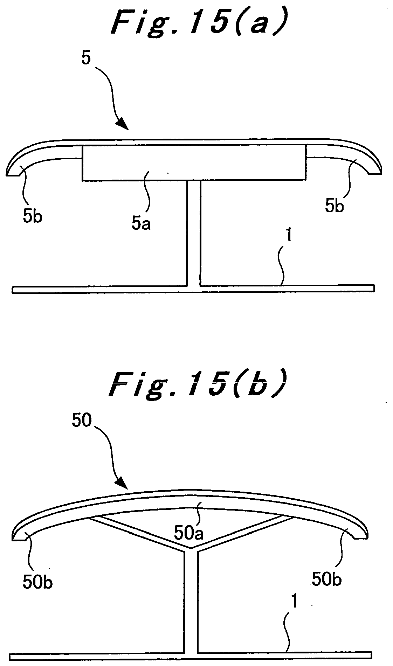

The pantograph upper surface shape storing unit 40 is configured to store shapes, i.e. tilt angles θ₂ from the horizontal direction, of the upper surface of the pantograph 5 corresponding to the deviating positions of given trolley wires 3, as illustrated in Part (b) of Fig. 5. For example, as illustrated in Part (a) of Fig. 15, for a trolley wire 3 in contact with a straight contact strip 5a, a tilt angle of 0 is stored, whereas for a trolley wire 3 in contact with the horn 5b, the tilt angle at that deviating position is stored. Moreover, as illustrated in Part (b) of Fig. 15, for a pantograph 50 with a contact strip 50a of a curved shape, tilt angles from the horizontal direction that continuously vary in accordance with the deviating position between the contact strip 50a and the horn 50b are stored.

The image processing unit 20 includes a wear measuring-deviation measuring part 12a, a processing memory 13, a deviating position pantograph shape tilt angle calculating part 16, and a trolley wire wear width correction calculation part 17.

The wear measuring-deviation measuring part 12a is configured to receive an image (wear data) of the trolley wire 5 obtained by the wear measuring-deviation measuring camera 2a, perform image processing on this image to calculate a trolley wire wear width W_{image}, output it to the processing memory 13, and also output the deviating position (deviation data) of the trolley wire 3 to the pantograph upper surface shape storing unit 40. The trolley wire wear width and deviation can be found by using, for example, Patent Document 7.

The processing memory 13 is a memory configured to temporarily store data used in the wear measuring-deviation measuring part 12a, the deviating position pantograph shape tilt angle calculating part 16, and the trolley wire wear width correction calculation part 17 at the time of computation.

The deviating position pantograph shape tilt angle calculating part 16 is configured to calculate the pantograph tilt angle θ₂ stored in the pantograph upper surface shape storing unit 40 and corresponding to the deviating position of the trolley wire 3 measured by the wear measuring-deviation measuring part 12a.

The trolley wire wear width correction calculation part 17 is configured to calculate an actual wear width W by multiplying a trolley wire wear width W_{image} measured by the wear measuring-deviation measuring part 12a and stored in the processing memory 13, by 1/cos θ₂ based on the tilt angle θ₂ of the pantograph shape corresponding to the deviating position of the trolley wire 3 found by the deviating position pantograph shape tilt angle calculating part 16 and stored in the pantograph upper surface shape storing unit 40 based on the deviating position of the trolley wire 3.

As is clear by replacing θ₁ with θ₂ in Part (b) of Fig. 8, this is because the tilt angle θ₂ of the pantograph shape is approximately equal to the tilt angle of the trolley wire 3, and the trolley wire wear width W_{image} measured by the wear measuring-deviation measuring part 12a is the product of the actual wear width W and cos θ₂.

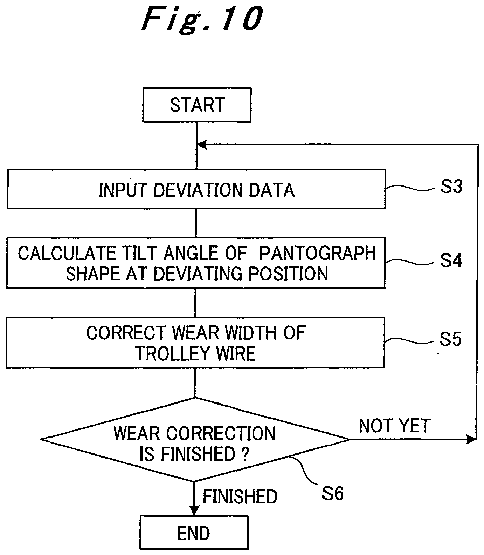

The operation sequence of this embodiment will be described by using a flowchart in Fig. 10.

First, an image of the worn surface of the trolley wire 3 is captured from immediately below by the wear measuring-deviation measuring camera 2a to measure the deviating position of the trolley wire 3, and image processing is performed by the wear measuring-deviation measuring part 12a on the image of the trolley wire 5 obtained by the wear measuring-deviation measuring camera 2a, and the deviating position (deviation data) of the trolley wire 3 is inputted to the pantograph upper surface shape storing unit 40 (step S3).

Thereafter, based on the deviating position of the trolley wire 3 calculated by the wear measuring-deviation measuring part 12a, the tilt angle θ₂ of the pantograph shape corresponding to the deviating position of the trolley wire 3 stored in the pantograph upper surface shape storing unit 40 is calculated by the deviating position pantograph shape tilt angle calculating part 16 (step S4).

Then, the actual wear width W is calculated by the trolley wire wear width correction calculation part 17 by multiplying the trolley wire wear width W_{image} measured by the wear measuring part 12 and stored in the processing memory 13, by 1/cos θ₂ based on the tilt angle θ₂ of the pantograph shape corresponding to the deviating position of the trolley wire 3 (step S5).

Subsequently, step S3, step S4, and step S5 are repeated until wear correction is finished for all the measurement points (step S6).

The lower surface of a trolley wire in contact with the horn 5b in Fig. 5 or the pantograph 50 with a contact strip of a curved shape in Fig. 6 is tilted by the upper surface of the pantograph 5 even if the pantograph is not tilted as a whole. As a result, the trolley wire wear width appears narrower to the camera which captures an image of the worn surface of the trolley wire from immediately below, thereby causing an error in the wear measurement value. However, as specifically described above based on this embodiment, the embodiment brings about an advantage that this error can be corrected based on the tilt angle of the pantograph shape at the deviating position of the trolley wire.

This embodiment is advantageous in that it does not need any of the pantograph image capturing cameras which are needed in Embodiment 1.

### EMBODIMENT 3

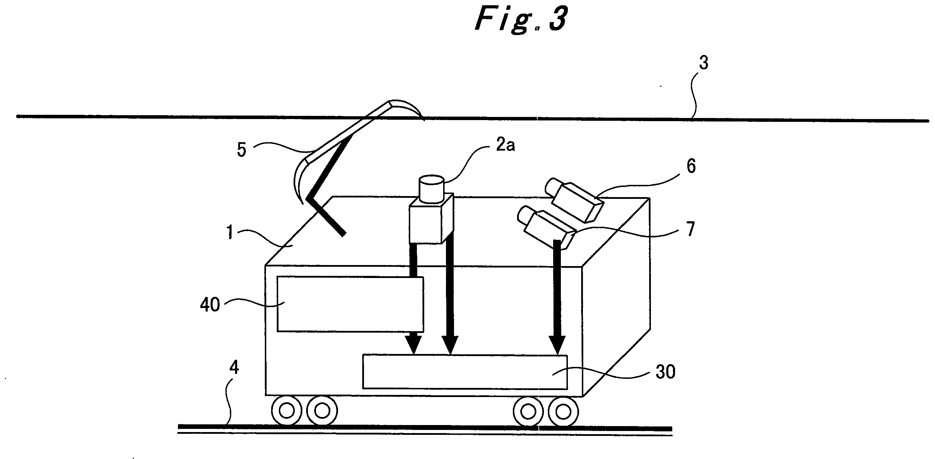

Fig. 3 illustrates a schematic view of a wear measuring device according to a third embodiment of the present invention.

This embodiment is characterized by correcting the wear width of a trolley wire by utilizing a fact that a tilt angle obtained by adding and a tilt angle θ₂ of a pantograph shape at a deviating position to a tilt angle θ₁ of a whole pantograph is approximately equal to the angle of the lower surface of the trolley wire as illustrated in Part (b) of Fig. 7.

As illustrated in Fig. 3, the wear measuring device of this embodiment includes two pantograph image capturing cameras 6, 7 and one wear measuring-deviation measuring camera 2a installed on the roof of a train 1, and an image processing unit 30 and a pantograph upper surface shape storing unit 40 installed inside the train 1.

A pantograph 5 is installed on the roof of the train 1, and markers 8, 9 as illustrated in Part (a) of Fig. 7 are attached to two, left and right areas of a contact strip 5a of this pantograph 5. As illustrated in Part (b) of Fig. 7, in a case where a trolley wire 3 is in contact with a horn 5b, a tilt angle obtained by adding a tilt angle θ₂ of the pantograph shape at the deviating position to a tilt angle θ₁ of the whole pantograph is approximately equal to the angle of the lower surface of the trolley wire.

The pantograph image capturing cameras 6, 7 are configured to capture images of the height levels of the pantograph 5 on the left and right sides, i.e. the markers 8, 9 attached to the two, left and right areas of the pantograph 5, respectively, and are installed at an obliquely upward angle. The design of each of the markers 8, 9 may be formed as, for example, a black and white stripe pattern as described in [Claim 1] and paragraph [0011] of Patent Document 4.

The wear measuring-deviation measuring camera 2a is installed at an upright angle so that the wear measuring-deviation measuring camera 2a can capture an image of the worn surface of the trolley wire 3 from immediately below and measure the deviating position of the trolley wire 3.

The pantograph upper surface shape storing unit 40 is configured to store shapes, i.e. tilt angles θ₂ from the horizontal direction, of the upper surface of the pantograph 5 corresponding to the deviating positions of given trolley wires 3, as illustrated in Part (b) of Fig. 5. For example, as illustrated in Part (a) of Fig. 15, for a trolley wire 3 in contact with the straight contact strip 5a, a tilt angle of 0 is stored, whereas for a trolley wire 3 in contact with the horn 5b, the tilt angle at that deviating position is stored. Moreover, as illustrated in Part (b) of Fig. 15, for a pantograph 50 with a contact strip 50a of a curved shape, tilt angles from the horizontal direction that continuously vary in accordance with the deviating position between the contact strip 50a and the horn 50b are stored.

The image processing unit 30 includes a height level measuring part 11, a wear measuring-deviation measuring part 12a, a processing memory 13, a whole pantograph tilt angle calculating part 14, a deviating position pantograph shape tilt angle calculating part 16, and a trolley wire wear width correction calculation part 18.

The height level measuring part 11 is configured to receive images (marker height level data) of the markers 8, 9 obtained by the pantograph image capturing cameras 6, 7, perform image processing on these images to calculate the height levels of the two markers 8, 9, and output them to the processing memory 13. The height levels of the markers 8, 9 can be calculated also by using, for example, Patent Documents 5, 6. The horizontal distance between the two markers 8, 9 can be calculated together with the height level calculation, or may be known in advance.

The wear measuring-deviation measuring part 12a is configured to receive an image (wear data) of the trolley wire 5 obtained by the wear measuring-deviation measuring camera 2a, perform image processing on this image to calculate a trolley wire wear width W_{image}, output it to the processing memory 13, and also output the deviating position (deviation data) of the trolley wire 3 to the pantograph upper surface shape storing unit 40. The trolley wire wear width and deviation can be found by using, for example, Patent Document 7.

The processing memory 13 is a memory configured to temporarily store data used in the wear measuring-deviation measuring part 12a, the deviating position pantograph shape tilt angle calculating part 16, and the trolley wire wear width correction calculation part 18 at the time of computation.

As illustrated in Part (a) of Fig. 7, the whole pantograph tilt angle calculating part 14 is configured to calculate the tilt (roll) angle θ₁ = atan (dH/L) of the whole pantograph 5 by using a left-right height level difference dH between the markers 8, 9 and a horizontal distance L between the markers 8, 9 which are calculated by the height level measuring part 11 and stored in the processing memory 13.

The deviating position pantograph shape tilt angle calculating part 16 is configured to calculate the tilt angle θ₂ of the pantograph shape corresponding to the deviating position of the trolley wire 3 stored in the pantograph upper surface shape storing unit 40 based on the deviating position of the trolley wire 3 measured by the wear measuring-deviation measuring part 12a.

The trolley wire wear width correction calculation part 18 is configured to calculate an actual wear width W by multiplying the trolley wire wear width W_{image} measured by the wear measuring-deviation measuring part 12a and stored in the processing memory 13, by 1/cos (θ₁+θ₂) based on the tilt (roll) angle θ₁ of the whole pantograph 5 found by the whole pantograph tilt angle calculating part 14 and the tilt angle θ₂ of the pantograph shape at the deviating position of the trolley wire 3 stored in the pantograph upper surface shape storing unit 40 and corresponding to the deviating position of the trolley wire 3 measured by the wear measuring-deviation measuring part 12a and stored in the processing memory 13.

As is clear by replacing θ₁ with θ₁+θ₂ in Part (b) of Fig. 8, this is because a tilt angle obtained by adding the tilt angle θ₂ of the pantograph shape at the deviating position to the tilt angle θ₁ of the whole pantograph is approximately equal to the angle of the lower surface of the trolley wire, and therefore the trolley wire wear width W_{image} measured by the wear measuring-deviation measuring part 12a is the product of the actual wear width W and cos (θ₁+θ₂).

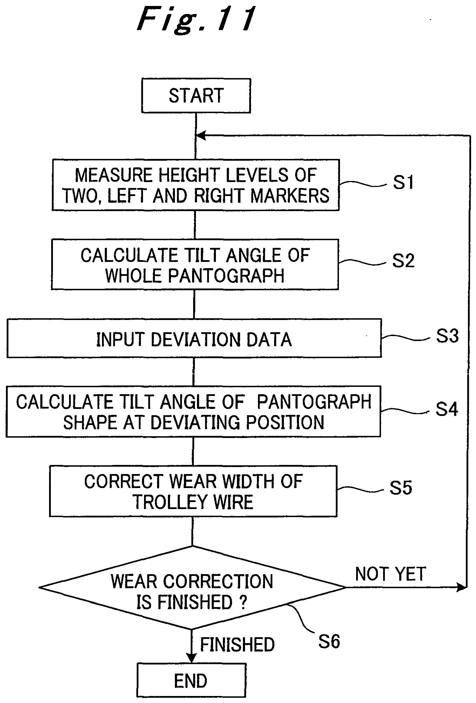

The operation sequence of this embodiment will be described by using a flowchart in Fig. 11.

First, images of the markers 8, 9 attached to the two, left and right areas of the pantograph 5 are captured by the pantograph image capturing cameras 6, 7, and the images of the markers 8, 9 obtained by the pantograph image capturing cameras 6, 7 are inputted to the height level measuring part 11, in which image processing is performed on these images to calculate the height levels of the two markers 8, 9, and they are outputted to the processing memory 13 (step S1).

Thereafter, the tilt (roll) angle θ₁ = atan (dH/L) of the whole pantograph 5 is calculated by the whole pantograph tilt angle calculating part 14 based on the left-right height level difference dH between the markers 8, 9 and the horizontal distance L between the markers 8, 9 which are calculated by the height level measuring part 11 and stored in the processing memory 13 (step S2).

Subsequently, an image of the worn surface of the trolley wire 3 is captured from immediately below by the wear measuring-deviation measuring camera 2a to measure the deviating position of the trolley wire 3, and image processing is performed by the wear measuring-deviation measuring part 12a on the image of the trolley wire 5 obtained by the wear measuring-deviation measuring camera 2a, and the deviating position (deviation data) of the trolley wire 3 is inputted to the pantograph upper surface shape storing unit 40 (step S3).

Thereafter, based on the deviating position of the trolley wire 3 calculated by the wear measuring-deviation measuring part 12a, the tilt angle θ₂ of the pantograph shape corresponding to the deviating position of the trolley wire 3 stored in the pantograph upper surface shape storing unit 40 is calculated by the deviating position pantograph shape tilt angle calculating part 16 (step S4).

Then, the actual wear width W is calculated by the trolley wire wear width correction calculation part 18 by multiplying the trolley wire wear width W_{image} measured by the wear measuring part 12 and stored in the processing memory 13, by 1/cos (θ₁+θ₂) based on the tilt angle θ₁ of the whole pantograph 5 and the tilt angle θ₂ of the pantograph shape corresponding to the deviating position of the trolley wire 3 (step S5).

Subsequently, step S1 to step S5 are repeated until wear correction is finished for all the measurement points (step S6).

As specifically described above based on this embodiment, the embodiment brings about an advantageous effect in which the advantageous effects of Embodiments 1 and 2 are combined. Specifically, in the conventional technique, the lower surface of a trolley wire is tilted by the upper surface of a pantograph due to the tilt angle of the whole pantograph and the tilt angle of the pantograph shape at the deviating position, and the wear width of the trolley wire appears narrower to a camera which captures an image of the worn surface of the trolley wire from immediately below, thereby causing an error in the wear measurement value. However, this embodiment brings about such an advantageous effect that this error can be corrected based on a tilt angle obtained by adding the tilt angle of the pantograph shape at the deviating position of the trolley wire to the tilt angle of the whole pantograph 5.

### INDUSTRIAL APPLICABILITY

The present invention is industrially widely applicable to the field of overhead wire inspection and measurement in which the wear of a trolley wire is measured by capturing an image of the width of the lower surface of the trolley wire from the roof of a train and processing this image.

### EXPLANATION OF THE REFERENCE NUMERALS

1 train
2 wear measuring camera
2a wear measuring-deviation measuring camera
3 trolley wire
4 rail
5, 50 pantograph
5a, 50a contact strip
5b, 50b horn
6, 7 pantograph image capturing camera
8, 9 marker
10, 20, 30 image processing unit
11 height level measuring part
12 wear measuring part
12a wear measuring-deviation measuring part
13 processing memory
14 whole pantograph tilt angle calculating part
15, 17, 18 trolley wire wear width correction calculation part
16 deviating position pantograph shape tilt angle calculating part
40 pantograph upper surface shape storing unit

## Claims

1. A wear measuring method in which an image of a lower surface of a trolley wire (3) in contact with a pantograph (5, 50) installed on the roof of a train is captured with a wear measuring camera (2, 2a), and image processing is performed on the captured image of the lower surface of the trolley wire to measure a wear width of the trolley wire,
**characterized in that** the wear measuring camera (2, 2a) is installed on the roof of the train and the wear measuring method comprises the step of finding the actual wear width by correcting the wear width in accordance with a tilt angle of the trolley wire (3) tilted by an upper surface of the pantograph (5, 50).

2. The wear measuring method according to claim 1, **characterized in that** a tilt angle of the whole pantograph (5, 50) is used as the tilt angle of the trolley wire (3).

3. The wear measuring method according to claim 1, **characterized in that** a tilt angle of a shape of the pantograph (5, 50) at a deviating position of the trolley wire (3) is used as the tilt angle of the trolley wire.

4. The wear measuring method according to claim 1, **characterized in that** a tilt angle obtained by adding a tilt angle of a shape of the pantograph (5, 50) at a deviating position of the trolley wire (3) to a tilt angle of the whole pantograph is used as the tilt angle of the trolley wire.

5. A wear measuring device comprising
a wear measuring camera (2, 2a) configured to capture an image of a lower surface of a trolley wire (3) in contact with a pantograph (5, 50) installed on the roof of a train, and
an image processing unit (10, 20, 30) configured to measure a wear width of the trolley wire by performing image processing on the image of the lower surface of the trolley wire captured by the wear measuring camera,
**characterized in that**
the wear measuring camera (2, 2a) is installed on the roof of the train, and
the image processing unit (10, 20, 30) includes a correction calculation part (15, 17, 18) configured to find the actual wear width by correcting the wear width in accordance with a tilt angle of the trolley wire (3) tilted by an upper surface of the pantograph (5, 50).

6. The wear measuring device according to claim 5, **characterized in that**
two pantograph image capturing cameras (6, 7) configured to capture images of markers (8, 9) attached to two, left and right areas of the pantograph (5, 50), respectively, are installed on the roof of the train,
the image processing unit (10) includes a whole pantograph tilt angle calculating part (14) configured to calculate a tilt angle of the whole pantograph based on the images of the markers obtained by the pantograph image capturing cameras, and
as the tilt angle of the trolley wire (3), the correction calculation part (15) uses the tilt angle of the whole pantograph calculated by the tilt angle calculating part.

7. The wear measuring device according to claim 5, **characterized in that**
the image processing unit (20) includes a deviation measuring part (12a) configured to measure a deviating position of the trolley wire (3) from the image of the trolley wire captured by the wear measuring camera (2a),
the wear measuring device comprises a pantograph upper surface shape storing unit (40) configured to store a shape of an upper surface of the pantograph (5, 50) corresponding to the deviating position of the trolley wire,
the image processing unit includes a deviating position pantograph shape tilt angle calculating part (16) configured to calculate a tilt angle of a shape of the pantograph at the deviating position of the trolley wire measured by the deviation measuring part, based on the shape of the upper surface of the pantograph stored in the pantograph upper surface shape storing unit, and
as the tilt angle of the trolley wire, the correction calculation part (17) uses the tilt angle of the shape of the pantograph at the deviating position of the trolley wire calculated by the tilt angle calculating part.

8. The wear measuring device according to claim 5, **characterized in that**
two pantograph image capturing cameras (6, 7) configured to capture images of markers (8) attached to two, left and right areas of the pantograph (5, 50), respectively, are installed on the roof of the train,
the image processing unit (30) includes a whole pantograph tilt angle calculating part (14) configured to calculate a tilt angle of the whole pantograph based on the images of the markers obtained by the pantograph image capturing cameras, and
the image processing unit includes a deviation measuring part (12a) configured to measure a deviating position of the trolley wire from the image of the trolley wire (3) captured by the wear measuring camera (2a),
the wear measuring device comprises a pantograph upper surface shape storing unit (40) configured to store a shape of an upper surface of the pantograph corresponding to the deviating position of the trolley wire,
the image processing unit includes a deviating position pantograph shape tilt angle calculating part (16) configured to calculate a tilt angle of a shape of the pantograph at the deviating position of the trolley wire measured by the deviation measuring part, based on the shape of the upper surface of the pantograph stored in the pantograph upper surface shape storing unit, and
as the tilt angle of the trolley wire, the correction calculation part (18) uses a tilt angle obtained by adding the tilt angle of the shape of the pantograph at the deviating position of the trolley wire calculated by the deviating position pantograph shape tilt angle calculating part to the tilt angle of the whole pantograph calculated by the whole pantograph tilt angle calculating part.

## Patentansprüche

1. Verschleißmessverfahren, in dem ein Bild einer unteren Fläche einer Oberleitung (3), die sich mit einem auf dem Dach eines Zugs installierten Stromabnehmer (5, 50) in Kontakt befindet, mit einer Verschleißmesskamera (2, 2a) aufgenommen wird und mit dem aufgenommenen Bild der unteren Fläche der Oberleitung eine Bildverarbeitung erfolgt, um eine Verschleißbreite der Oberleitung zu messen,
**dadurch gekennzeichnet, dass** die Verschleißmesskamera (2, 2a) auf dem Dach des Zugs installiert ist und das Verschleißmessverfahren einen Schritt zum Gewinnen der tatsächlichen Verschleißbreite durch Korrigieren der Verschleißbreite entsprechend einem Kippwinkel der Oberleitung (3), die von einer oberen Fläche des Stromabnehmers (5, 50) gekippt wird, umfasst.

2. Verschleißmessverfahren nach Anspruch 1, **dadurch gekennzeichnet, dass** für den Kippwinkel der Oberleitung (3) der Kippwinkel des gesamten Stromabnehmers (5, 50) verwendet wird.

3. Verschleißmessverfahren nach Anspruch 1, **dadurch gekennzeichnet, dass** für den Kippwinkel der Oberleitung der Neigungswinkel einer Form des Stromabnehmers (5, 50) an der Auslenkposition der Oberleitung (3) verwendet wird.

4. Verschleißmessverfahren nach Anspruch 1, **dadurch gekennzeichnet, dass** für den Kippwinkel der Oberleitung der Kippwinkel verwendet wird, der durch Addieren des Neigungswinkels der Form des Stromabnehmers (5, 50) an der Auslenkposition der Oberleitung (3) zu dem Kippwinkel des gesamten Stromabnehmers gewonnen wird.

5. Verschleißmessvorrichtung umfassend:
eine Verschleißmesskamera (2, 2a) zum Aufnehmen eines Bilds der unteren Fläche einer Oberleitung (3), die sich in Kontakt mit einem auf dem Dach eines Zugs installierten Stromabnehmer (5, 50) befindet, und
eine Bildverarbeitungseinheit (10, 20, 30), zum Messen einer Verschleißbreite der Oberleitung durch Bildverarbeitung anhand des von der Verschleißmesskamera aufgenommenen Bilds der unteren Fläche der Oberleitung,
**dadurch gekennzeichnet, dass**
die Verschleißmesskamera (2, 2a) auf dem Dach des Zugs installiert ist und
die Bildverarbeitungseinheit (10, 20, 30) einen Korrekturberechnungsabschnitt (15, 17, 18) enthält, der zum Gewinnen der tatsächlichen Verschleißbreite durch Korrigieren der Verschleißbreite entsprechend einem Kippwinkel der Oberleitung (3), die von einer oberen Fläche des Stromabnehmers (5, 50) gekippt wird, eingerichtet ist.

6. Verschleißmessvorrichtung nach Anspruch 5, **dadurch gekennzeichnet, dass**
auf dem Dach des Zugs zwei Stromabnehmerbild-Aufnahmekameras (6, 7) installiert sind, die zur Aufnahme von Bildern von Markierungen (8, 9) eingerichtet sind, die entsprechenderweise links und rechts an zwei Bereichen des Stromabnehmers (5, 50) angebracht sind,
die Bildverarbeitungseinheit (10) einen Kippwinkelberechnungsabschnitt (14) für den gesamten Stromabnehmers enthält, der zum Berechnen des Kippwinkel des gesamten Stromabnehmers aufgrund der von den Stromabnehmerbild-Aufnahmekameras gewonnenen Bildern der Markierungen eingerichtet ist, und
der Korrekturberechnungsabschnitt (15) als Kippwinkel der Oberleitung (3) den vom Kippwinkelberechnungsabschnitt berechneten Kippwinkel des gesamten Stromabnehmers verwendet.

7. Verschleißmessvorrichtung nach Anspruch 5, **dadurch gekennzeichnet, dass**
die Bildverarbeitungseinheit (20) eine Auslenkmesseinrichtung (12a) enthält, die zum Messen einer Auslenkposition der Oberleitung (3) aus dem von der Verschleißmesskamera (2a) gewonnenen Bild der Oberleitung eingerichtet ist,
die Verschleißmessvorrichtung eine Speichereinheit (40) für die Form der oberen Oberfläche des Stromabnehmers umfasst, die zum Speichern der Form der oberen Fläche des Stromabnehmers (5, 50) entsprechend der Auslenkposition der Oberleitung eingerichtet ist,
die Bildverarbeitungseinheit einen Kippwinkelberechnungsabschnitt (16) für eine Auslenkpositions-Stromabnehmerform enthält, die zum Berechnen des Neigungswinkels der Form des Stromabnehmers an der von dem Auslenkpositionsmessabschnitt gemessenen Auslenkposition der Oberleitung aufgrund der Form der oberen Fläche des Stromabnehmers, die in der Speichereinheit für die Form der oberen Fläche des Stromabnehmers gespeichert ist, eingerichtet ist, und
der Korrekturberechnungsabschnitt (17) als Kippwinkel der Oberleitung den Neigungswinkel der Form des Stromabnehmers an der Auslenkposition der Oberleitung verwendet, der von dem Kippwinkelberechnungsabschnitt berechnet ist.

8. Verschleißmessvorrichtung nach Anspruch 5, **dadurch gekennzeichnet, dass**
auf dem Dach des Zugs zwei Stromabnehmerbild-Aufnahmekameras (6, 7) installiert sind, die zur Aufnahme von Bildern von Markierungen (8) eingerichtet sind, die entsprechenderweise links und rechts an zwei Bereichen des Stromabnehmers (5, 50) angebracht sind,
die Bildverarbeitungseinheit (30) einen Kippwinkelberechnungsabschnitt (14) für den gesamten Stromabnehmer enthält, der zum Berechnen des Kippwinkel des gesamten Stromabnehmers aufgrund der von den Stromabnehmerbild-Aufnahmekameras gewonnenen Bildern der Markierungen eingerichtet ist, und
die Bildverarbeitungseinheit einen Auslenkmessabschnitt (12a) enthält, der zum Messen einer Auslenkposition der Oberleitung aus dem von der Verschleißmesskamera (2a) gewonnenen Bild der Oberleitung (3) eingerichtet ist,
wobei die Verschleißmessvorrichtung eine Speichereinheit (40) für die Form der oberen Fläche des Stromabnehmers umfasst, die zum Speichern der Form der oberen Fläche des Stromabnehmers entsprechend der Auslenkposition der Oberleitung eingerichtet ist,
die Bildverarbeitungseinheit einen Kippwinkelberechnungsabschnitt (16) für die Auslenkpositions-Stromabnehmerform enthält, der zum Berechnen des Neigungswinkels der Form des Stromabnehmers an der von dem Auslenkpositionsmessabschnitt gemessenen Auslenkposition der Oberleitung aufgrund der in der Speichereinheit für die Form der oberen Fläche des Stromabnehmers gespeicherten Form der oberen Fläche des Stromabnehmers eingerichtet ist, und
der Korrekturberechnungsabschnitt (18) als Kippwinkel der Oberleitung den Kippwinkel verwendet, der durch Addieren des von dem Kippwinkelberechnungsabschnitt für die Auslenkpositions-Stromabnehmerform berechneten Neigungswinkels der Form des Stromabnehmers an der Auslenkposition der Oberleitung zu dem von dem Kippwinkelberechnungsabschnitt für den gesamten Stromabnehmer berechneten Kippwinkel des gesamten Stromabnehmers gewonnen wird.

## Revendications

1. Procédé de mesure d'usure, dans lequel une image d'une surface inférieure d'un fil de prise de courant (3) en contact avec un pantographe (5, 50) installé sur le toit d'un train est capturée par une caméra de mesure d'usure (2, 2a), et un traitement d'image est effectué sur l'image capturée de la surface inférieure du fil de prise de courant, de façon à mesurer une largeur d'usure du fil de prise de courant,
**caractérisé en ce que** la caméra de mesure d'usure (2, 2a) est installée sur le toit du train et **en ce que** le procédé de mesure d'usure comprend l'étape consistant à trouver la largeur d'usure effective par la correction de la largeur d'usure en fonction d'un angle d'inclinaison du fil de prise de courant (3) incliné par une surface supérieure du pantographe (5, 50).

2. Procédé de mesure d'usure selon la revendication 1, **caractérisé en ce qu'**un angle d'inclinaison de l'ensemble du pantographe (5, 50) est utilisé comme angle d'inclinaison du fil de prise de courant (3).

3. Procédé de mesure d'usure selon la revendication 1, **caractérisé en ce qu'**un angle d'inclinaison d'une forme du pantographe (5, 50) dans une position d'écart du fil de prise de courant (3) est utilisé comme angle d'inclinaison du fil de prise de courant.

4. Procédé de mesure d'usure selon la revendication 1, **caractérisé en ce qu'**un angle d'inclinaison obtenu par l'addition d'un angle d'inclinaison d'une forme du pantographe (5, 50) dans une position d'écart du fil de prise de courant (3) à un angle d'inclinaison de l'ensemble du pantographe est utilisé comme angle d'inclinaison du fil de prise de courant.

5. Dispositif de mesure d'usure, comprenant :
une caméra de mesure d'usure (2, 2a), configurée de façon à capturer une image d'une surface inférieure d'un fil de prise de courant (3) en contact avec un pantographe (5,50) installé sur le toit d'un train, et
une unité de traitement d'image (10, 20, 30), configurée de façon à mesurer une largeur d'usure du fil de prise de courant par la réalisation d'un traitement d'image sur l'image de la surface inférieure du fil de prise de courant, capturée par la caméra de mesure d'usure,
**caractérisé en ce que** :
la caméra de mesure d'usure (2, 2a) est installée sur le toit du train, et
l'unité de traitement d'image (10, 20, 30) comprend une partie de calcul de correction (15, 17, 18), configurée de façon à trouver la largeur d'usure effective par la correction de la largeur d'usure en fonction d'un angle d'inclinaison du fil de prise de courant (3) incliné par une surface supérieure du pantographe (5, 50).

6. Dispositif de mesure d'usure selon la revendication 5, **caractérisé en ce que** :
deux caméras de capture d'image de pantographe (6, 7), configurées de façon à capturer des images de marqueurs (8, 9) fixés à deux zones gauche et droite du pantographe (5, 50), respectivement, sont installées sur le toit du train,
l'unité de traitement d'image (10) comprend une partie de calcul d'angle d'inclinaison de pantographe entier (14), configurée de façon à calculer un angle d'inclinaison de l'ensemble du pantographe en fonction des images des marqueurs obtenues par les caméras de capture d'image de pantographe, et
comme angle d'inclinaison du fil de prise de courant (3), la partie de calcul de correction (15) utilise l'angle d'inclinaison de l'ensemble du pantographe, calculé par la partie de calcul d'angle d'inclinaison.

7. Dispositif de mesure d'usure selon la revendication 5, **caractérisé en ce que** :
l'unité de traitement d'image (20) comprend une partie de mesure d'écart (12a), configurée de façon à mesurer une position d'écart du fil de prise de courant (3) par rapport à l'image du fil de prise de courant capturée par la caméra de mesure d'usure (2a),
le dispositif de mesure d'usure comprend une unité de mémorisation de forme de surface supérieure de pantographe (40), configurée de façon à mémoriser une forme d'une surface supérieure du pantographe (5, 50) correspondant à la position d'écart du fil de contact,
l'unité de traitement d'image comprend une partie de calcul d'angle d'inclinaison de forme de pantographe de position d'écart (16), configurée de façon à calculer un angle d'inclinaison d'une forme du pantographe dans la position d'écart du fil de contact, mesurée par la partie de mesure d'écart, en fonction de la forme de la surface supérieure du pantographe mémorisée dans l'unité de mémorisation de forme de surface supérieure de pantographe, et
comme angle d'inclinaison du fil de prise de courant, la partie de calcul de correction (17) utilise l'angle d'inclinaison de la forme du pantographe dans la position d'écart du fil de prise de courant, calculé par la partie de calcul d'angle d'inclinaison.

8. Dispositif de mesure d'usure selon la revendication 5, **caractérisé en ce que** :
deux caméras de capture d'image de pantographe (6, 7), configurées de façon à capturer des images de marqueurs (8) fixés à deux zones gauche et droite du pantographe (5, 50), respectivement, sont installées sur le toit du train,
l'unité de traitement d'image (30) comprend une partie de calcul d'angle d'inclinaison de pantographe entier (14), configurée de façon à calculer un angle d'inclinaison de l'ensemble du pantographe en fonction des images des marqueurs, obtenues par les caméras de capture d'image de pantographe, et
l'unité de traitement d'image comprend une partie de mesure d'écart (12a), configurée de façon à mesurer une position d'écart du fil de prise de courant par rapport à l'image du fil de prise de courant (3) capturée par la caméra de mesure d'usure (2a),
le dispositif de mesure d'usure comprend une unité de mémorisation de forme de surface supérieure de pantographe (40), configurée de façon à mémoriser une forme d'une surface supérieure du pantographe correspondant à la position d'écart du fil de prise de courant,
l'unité de traitement d'image comprend une partie de calcul d'angle d'inclinaison de forme de pantographe de position d'écart (16), configurée de façon à calculer un angle d'inclinaison d'une forme du pantographe dans la position d'écart du fil de prise de courant, mesurée par la partie de mesure d'écart, en fonction de la forme de la surface supérieure du pantographe mémorisée dans l'unité de mémorisation de forme de surface supérieure de pantographe, et
comme angle d'inclinaison du fil de prise de courant, la partie de calcul de correction (18) utilise un angle d'inclinaison obtenu par l'addition de l'angle d'inclinaison de la forme du pantographe dans la position d'écart du fil de prise de courant, calculé par la partie de calcul d'angle d'inclinaison de forme de pantographe de position d'écart, à l'angle d'inclinaison de l'ensemble du pantographe, calculé par la partie de calcul d'angle d'inclinaison d'angle de pantographe entier.
